# EUROPÄISCHE PATENTSCHRIFT

(11) **EP 3 007 540 B1**
(45) Veröffentlichungstag und Bekanntmachung des Hinweises auf die Patenterteilung: **04.12.2019**
(21) Anmeldenummer: 14735481.5
(22) Anmeldetag: 04.06.2014
(51) Int. Cl.: A01D 34/53, A01D 45/02

(54) **PFLÜCKVORRICHTUNG**
PICKING DEVICE
DISPOSITIF À CUEILLIR

(30) Priorität: 13.06.2013 DE 102013106197
(43) Veröffentlichungstag der Anmeldung: 20.04.2016
(73) Patentinhaber: Kalverkamp, Klemens, 49401 Damme (DE); Kalverkamp, Felix, 49401 Damme (DE)
(72) Erfinder: Kalverkamp, Klemens, 49401 Damme (DE); Kalverkamp, Felix, 49401 Damme (DE)
(74) Vertreter: Bossmeyer, Jörg Peter
(86) Internationale Anmeldenummer: PCT/EP2014/061554
(87) Internationale Veröffentlichungsnummer: WO 2014/198598

(56) Entgegenhaltungen:
- DE-A1- 19 734 747
- DE-A1-102009 051 053
- US-A- 5 040 362
- US-A1- 2005 102 843

## Beschreibung

Die Erfindung betrifft eine Pflückvorrichtung mit wenigstens einer in einer Arbeitsrichtung bewegbaren Halterung, an der wenigstens eine Fördereinrichtung mit einem vorderen Erfassungsbereich vorgesehen ist, mit dem die Fördereinrichtung durch Bewegen der Halterung in Arbeitsrichtung in Kontakt mit Früchte umfassenden Pflanzen bringbar ist, sodass diese mittels der Fördereinrichtung erfassbar und in einer oder wenigstens einer Förderrichtung förderbar sind, und einem hinter der Fördereinrichtung vorgesehen Pflückspalt, durch welchen hindurch die Pflanzen unter Abtrennen der Früchte führbar sind.

Die DE 197 34 747 A1 offenbart ein Maisernte-Vorsatzgerät mit fünf nebeneinander angeordneten Förderscheiben, die als Doppelscheiben ausgebildet sind, die um eine gemeinsame Achse rotieren und einen Abstand voneinander haben. Ferner sind zwischen den Förderscheiben zwei zueinander koaxiale Ausräumscheiben an einem Lagerarm gelagert. Die Bereiche, in denen sich zwei benachbarte Förderscheiben am nächsten kommen, bilden jeweils gemeinsam die Einzugsbereiche des Mähwerks, denen je ein Pflückaggregat nachgeordnet ist, welches aus zwei Pflückplatten besteht, die zwischen sich einen Pflückspalt bilden. Darüber liegen zwei Kettenförderer, welche die abgepflückten Maiskolben nach hinten transportieren. Unter den Pflückplatten sind zwei parallele Pflückwalzen gelagert, deren zylindrischer Walzenkörper vorne eine kegelförmige Einzugsspitze hat, an der Schneckenwindungen angebracht sind. Die Kettenförderer bringen die abgepflückten Kolben weiter nach hinten, bis sie dort in den Trog einer Querförderschnecke fallen, welche von beiden Seiten her zur Mitte fördert, wo dann die Übergabe der geernteten Maiskolben an die Erntemaschine erfolgt.

Die Anordnung aus den Doppelscheiben mit dazwischenliegenden Ausräumscheiben und koaxialer Messerscheibe sowie den dazugehörigen Halterungen und Antriebsteilen ist schwer und baut in Fahrtrichtung groß, sodass die Anordnung eine nicht unerhebliche Belastung der Erntemaschine hervorruft, insbesondere in Bezug auf deren Achslast. Für eine Straßenzulassung in Deutschland sind die Achslasten aber begrenzt. Ferner kann eine hohe Achslast zu einer Schwächung der Bodenstruktur und zu einem Einsinken der Erntemaschine in den Boden führen.

Ausgehend hiervon liegt der Erfindung die Aufgabe zugrunde, eine Möglichkeit zu schaffen, dass eine solche Belastung reduziert werden kann.

Diese Aufgabe wird erfindungsgemäß durch eine Pflückvorrichtung nach Anspruch 1 und durch ein Verfahren nach Anspruch 12 gelöst. Bevorzugte Weiterbildungen der Erfindung sind in den Unteransprüchen und in der nachfolgenden Beschreibung gegeben.

Die erfindungsgemäße Pflückvorrichtung weist eine oder wenigstens eine in einer Arbeitsrichtung bewegbare Halterung, an der eine oder wenigstens eine Fördereinrichtung mit einem vorderen Erfassungsbereich vorgesehen ist, mit dem die Fördereinrichtung durch Bewegen der Halterung in Arbeitsrichtung in Kontakt mit Früchte umfassenden Pflanzen bringbar ist, sodass diese mittels der Fördereinrichtung erfassbar und in einer oder wenigstens einer Förderrichtung förderbar sind, und einen oder wenigstens einen, insbesondere von vorne gesehen, hinter der Fördereinrichtung vorgesehenen Pflückspalt auf, durch welchen hindurch die Pflanzen unter Abtrennen der Früchte führbar sind, wobei die Fördereinrichtung eine um eine quer oder näherungsweise quer zur Arbeitsrichtung ausgerichtete Schneckenachse drehbar an der Halterung gelagerte Schneidförderschnecke umfasst, wobei die Förderrichtung in Richtung der Schneckenachse verläuft.

Die Förderrichtung verläuft im Erfassungsbereich geradlinig oder im Wesentlichen geradlinig oder näherungsweise geradlinig. Ferner verläuft die Förderrichtung im Erfassungsbereich quer oder im Wesentlichen quer oder näherungsweise quer zur Arbeitsrichtung. Somit ist die Fördereinrichtung in Arbeitsrichtung relativ kurz ausbildbar. Insbesondere kann auf kreisförmige Förderscheiben verzichtet werden, sodass die Belastung der Erntemaschine relativ gering gehalten werden kann. Eine Bewegung der Pflückvorrichtung und/oder der Fördereinrichtung in Arbeitsrichtung entspricht insbesondere einer Bewegung der Pflückvorrichtung und/oder der Fördereinrichtung nach vorne.

Jede der Pflanzen weist insbesondere einen oder wenigstens einen Stängel auf. Bevorzugt sitzen an jedem Stängel eine oder mehrere der Früchte. Vorzugsweise erstrecken sich die Pflanzen mit ihren Stängeln senkrecht oder näherungsweise senkrecht zum Erdboden. Bevor die Fördereinrichtung in Kontakt mit den Pflanzen gebracht wird, sind diese insbesondere durch ihre Wurzeln einseitig im Erdboden fixiert und erstrecken sich von diesem aus vorzugsweise nach oben.

An der Halterung sind bevorzugt mehrere Messer vorgesehen und/oder befestigt, wobei die Pflanzen, die insbesondere noch im Erdboden fixiert sind, mittels der Fördereinrichtung erfassbar, gegen die oder wenigstens eines der Messer führbar und an den Messern oder an dem wenigstens einen Messer durchtrennbar sind. Durch das Durchtrennen der Pflanzen werden diese insbesondere von ihren im Erdboden sitzenden Wurzeln getrennt. Die Pflanzen sind bevorzugt durch das Zusammenwirken der Fördereinrichtung mit den Messern durchtrennbar. Das Durchtrennen oder Abschneiden der Pflanzen erfolgt insbesondere dadurch, dass deren Stängel durchtrennt und/oder abgeschnitten werden, wobei der Trennschnitt vorzugsweise in Bodennähe erfolgt. Bevorzugt umfassen die Messer jeweils eine Schneide, wobei die Pflanzen insbesondere durch ein Zusammenwirken der Fördereinrichtung mit den Schneiden der Messer durchtrennbar sind oder durchtrennt werden.

Bevorzugt sind die Pflanzen, vorzugsweise die abgetrennten Pflanzen, mittels der Fördereinrichtung im Erfassungsbereich geradlinig oder im Wesentlichen geradlinig oder näherungsweise geradlinig transportierbar und/oder förderbar, insbesondere in Förderrichtung. Bevorzugt sind die Pflanzen ferner, vorzugsweise die abgetrennten Pflanzen, mittels der Fördereinrichtung im Erfassungsbereich quer oder im Wesentlichen quer oder näherungsweise quer zur Arbeitsrichtung transportierbar und/oder förderbar, insbesondere in Förderrichtung.

Die Förderrichtung verläuft im Erfassungsbereich bevorzugt in einer zum Erdboden parallelen oder im Wesentlichen parallelen oder näherungsweise parallelen Richtung. Vorzugsweise ist die Fördereinrichtung derart ausgebildet, dass die Förderrichtung im Erfassungsbereich in einer zum Erdboden parallelen oder im Wesentlichen parallelen oder näherungsweise parallelen Richtung verläuft. Bevorzugt sind die Pflanzen, vorzugsweise die abgetrennten Pflanzen, mittels der Fördereinrichtung in einer zum Erdboden parallelen oder im Wesentlichen parallelen oder näherungsweise parallelen Richtung transportierbar und/oder förderbar, insbesondere in Förderrichtung.

Der Erfassungsbereich erstreckt sich bevorzugt quer oder im Wesentlichen quer oder näherungsweise quer zur Arbeitsrichtung. Vorzugsweise erstreckt sich der Erfassungsbereich über oder annähernd über die gesamte Breite der Fördereinrichtung oder über einen wesentlichen oder zumindest nicht unerheblichen Teil dieser Breite. Die Breite der Fördereinrichtung erstreckt sich insbesondere quer oder im Wesentlichen quer oder näherungsweise quer zur Arbeitsrichtung und/oder parallel oder im Wesentlichen parallel oder näherungsweise parallel zum Erdboden. Ferner erstreckt sich der Erfassungsbereich vorzugsweise parallel oder im Wesentlichen parallel oder näherungsweise parallel zum Erdboden.

Der Pflückspalt ist insbesondere an der Halterung vorgesehen und/oder mit dieser verbunden und/oder an einem oder wenigstens einem mit der Halterung verbundenen Bauteil vorgesehen. Bevorzugt ist der Pflückspalt von seitlichen Rändern begrenzt, sodass die Pflanzen durch den Pflückspalt hindurch unter Abtrennen der Früchte an den Rändern ohne die Früchte führbar sind. Vorteilhaft sind wenigstens zwei im Abstand zueinander angeordnete Pflückplatten vorgesehen, zwischen denen der Pflückspalt gebildet ist. Die Pflückplatten sind insbesondere an der Halterung vorgesehen und/oder mit dieser verbunden und/oder an dieser befestigt und/oder bilden einen Teil derselben. Bevorzugt bilden die Pflückplatten das eine oder wenigstens eine mit der Halterung verbunden Bauteil. Der Pflückspalt ist vorzugsweise länglich ausgebildet. Bevorzugt ist der Stängel jeder Pflanze mit seiner Längsachse quer oder näherungsweise quer zur Längsachse des Pflückspalts ausgerichtet dem Pflückspalt zuführbar. Die Breite des Pflückspalts ist vorzugsweise derart bemessen, dass die Früchte nicht durch den Pflückspalt hindurchpassen. Ferner ist die Breite des Pflückspalts vorzugsweise derart bemessen, dass die Stängel durch den Pflückspalt hindurchpassen.

Gemäß einer Ausgestaltung ist der Pflückspalt mit seiner Längsachse quer oder im Wesentlichen quer oder näherungsweise quer zur Arbeitsrichtung ausgerichtet. Vorzugsweise ist der Pflückspalt mit seiner Längsachse parallel oder im Wesentlichen parallel oder näherungsweise parallel zum Erdboden ausgerichtet. Auch hierdurch ist eine relativ kurze Ausbildung der Pflückvorrichtung in Arbeitsrichtung möglich. Gemäß einer Alternative ist der Pflückspalt mit seiner Längsachse in oder im Wesentlichen in oder näherungsweise in Arbeitsrichtung ausgerichtet. Vorzugsweise ist der Pflückspalt mit seiner Längsachse parallel oder im Wesentlichen parallel oder näherungsweise parallel zum Erdboden ausgerichtet oder gegenüber diesem geneigt, insbesondere in rückwärtiger Richtung nach oben geneigt. Ist der Pflückspalt mit seiner Längsachse gegenüber dem Erdboden geneigt, so steigt er insbesondere nach hinten an, oder anders ausgedrückt nimmt der Abstand zwischen dem Pflückspalt und dem Erdboden insbesondere nach hinten zu.

Gemäß einer Weiterbildung ist ein oder wenigstens ein Antrieb vorgesehen, mittels welchem die Fördereinrichtung antreibbar ist. Erfindungsgemäß umfasst die Fördereinrichtung eine Schneidförderschnecke, die um eine Schneckenachse drehbar an der Halterung gelagert ist. Die Schneckenachse der Schneidförderschnecke ist insbesondere eine gerade oder im Wesentlichen gerade oder näherungsweise gerade Achse. Erfindungsgemäß ist die Schneckenachse der Schneidförderschnecke quer oder näherungsweise quer zur Arbeitsrichtung und bevorzugt parallel oder im Wesentlichen parallel oder näherungsweise parallel zum Erdboden ausgerichtet. Vorteilhaft sind die Pflanzen, vorzugsweise die abgetrennten Pflanzen, mittels der Schneidförderschnecke, bevorzugt im Erfassungsbereich, entlang der Schneckenachse der Schneidförderschnecke transportierbar und/oder förderbar, insbesondere in Förderrichtung. In einer nicht unter den Erfindungsgegenstand fallenden Ausführungsform kann die Fördereinrichtung auch als Zugmittelförderer, wie z.B. als Kettenförderer ausgebildet sein oder einen solchen Zugmittelförderer umfassen. Der Zugmittelförderer weist z.B. mehrere entlang eines Zugmittels im Abstand zueinander angeordnete Finger oder Greifer auf, die insbesondere mit den Messern zum Durchtrennen der Pflanzen zusammenwirken oder zusammenwirken können. Die Greifer sind vorzugsweise mit Schneiden versehen, sodass ein solcher Zugmittelförderer auch als Greifschneider bezeichnet werden kann.

Durch den Einsatz einer Schneidförderschnecke und/oder eines Linearförderers, der z.B. durch einen Zugmittelförderer gebildet ist, ist insbesondere sichergestellt, dass die Förderrichtung im Erfassungsbereich geradlinig oder im Wesentlichen geradlinig oder näherungsweise geradlinig verläuft. Insbesondere ist ferner sicherstellbar, dass die Förderrichtung im Erfassungsbereich quer oder im Wesentlichen quer oder näherungsweise quer zur Arbeitsrichtung verläuft, beispielsweise dadurch, dass die Fördereinrichtung quer oder im Wesentlichen quer oder näherungsweise quer zur Arbeitsrichtung ausgerichtet ist und/oder dass die Schneckenachse der Schneidförderschnecke quer oder im Wesentlichen quer oder näherungsweise quer zur Arbeitsrichtung ausgerichtet ist. Vorzugsweise bildet der Ausdruck Linearförderer einen Oberbegriff für die Schneidförderschnecke und/oder für die die Schneidförderschnecke umfassende Fördereinrichtung und/oder für den Zugmittelförderer und/oder für einen anderen Förderer mit geradliniger oder im Wesentlichen geradliniger oder näherungsweise geradliniger Förderrichtung.

Vorzugsweise ist die Schneidförderschnecke, insbesondere mittels des Antriebs, von vorne gesehen nach oben drehend antreibbar, sodass die durchtrennten Pflanzen nicht unter die Schneidförderschnecke gezogen werden können. Das bevorzugte Merkmal, dass die Schneidförderschnecke, insbesondere mittels des Antriebs, von vorne gesehen nach oben drehend antreibbar ist, kann insbesondere auch derart formuliert werden, dass die Schneidförderschnecke, vorzugsweise mittels des Antriebs, in Gegenrichtung zur Arbeitsrichtung drehend antreibbar ist.

Zwischen dem Schneckengang der Schneidförderschnecke und den Schneiden der Messer ist vorzugsweise jeweils ein Schnittwinkel ausgebildet, der insbesondere größer als 0° und kleiner als 90° ist. Durch geeignete Wahl des Schnittwinkels kann das Durchtrennen der Pflanzen optimiert werden. Vorzugsweise liegt der Schnittwinkel zwischen 3° bis 20°. In Grenzfällen sind allerdings auch Schnittwinkel von 0° und 90° möglich.

Gemäß einer Weiterbildung weist der Schneckengang der Schneidförderschnecke eine oder mehrere Schneiden auf, die vorzugsweise mit den Messern und/oder mit den Schneiden der Messer zum Durchtrennen der Pflanzen zusammenwirken oder zusammenwirken können. Auch hierdurch kann eine Verbesserung des Trennschnitts erreicht werden. Insbesondere ist die Schneide oder sind die Schneiden des Schneckengangs an seinem bezüglich der Schneckenachse radial äußeren Rand vorgesehen und z.B. durch eine oder mehrere scharfe Kanten gebildet. Gemäß einer Weiterbildung sind die Messer in Förderrichtung und/oder entlang der Schneckenachse im Abstand zueinander angeordnet. Zur weiteren Optimierung des Trennschnitts sind die Messer vorzugsweise gekrümmt ausgebildet und umgreifen die Schneidförderschnecke zumindest teilweise. Hierdurch kann erzielt werden, dass die zu schneidenden Pflanzen während des Trennvorgangs an den Schneiden der Messer entlanggeführt werden.

Die Messer sind vorzugsweise um die Schneckenachse gekrümmt. Insbesondere untergreifen die Messer die Schneidförderschnecke. Bevorzugt erstrecken sich die Messer von unterhalb der Schneidförderschnecke bis vor die Schneidförderschnecke mit einem gekrümmten Verlauf nach oben. Der gekrümmte Verlauf der Messer überstreicht dabei bevorzugt einen Winkel von wenigstens 30° oder wenigstens 45°. Ferner können die Schneiden der Messer jeweils auf einer senkrecht zur Schneckenachse ausgerichteten Ebene liegen oder schräg zu dieser Ebene verlaufen, wobei letzteres bevorzugt ist.

Die Messer umfassen bevorzugt jeweils einen tragenden Teil, von dem die jeweilige Schneide in Richtung der Schneckenachse vorsteht. Die Messer sind insbesondere mit ihren tragenden Teilen fest mit der Halterung verbunden. Bevorzugt sind die Schneiden gegenüber den tragenden Teilen in Richtung auf die Schneckenachse abgewinkelt, sodass die Schneiden mit einer, insbesondere fiktiven, Mantelfläche der Schneidförderschnecke jeweils einen Freiwinkel einschließen. Durch den Freiwinkel kann insbesondere ein Festsetzen von Pflanzenfasern zwischen der Schneidförderschnecke und den Messern verhindert werden. Das Merkmal, dass die Messer gekrümmt ausgebildet sind und die Schneidförderschnecke zumindest teilweise umgreifen, gilt entsprechend für die Schneiden der Messer.

Die Messer können starr ausgebildet sein. Bevorzugt sind die Messer aber jeweils federelastisch ausgebildet und weisen im entspannten Zustand insbesondere eine stärkere Krümmung um die Schneckenachse auf als eine, insbesondere fiktive, Mantelfläche der Schneidförderschnecke. Hierdurch ist sichergestellt, dass die Messer und die Schneidförderschnecke während des Schnitts gegeneinander gespannt sind, sodass eine Verbesserung des Schnittergebnisses erzielbar ist. Der Schneckengang drückt während der Drehung der Schneidförderschnecke gegen die Messer, sodass diese unter Verringerung ihrer Krümmung gespannt werden. Bei einer Weiterdrehung der Schneidförderschnecke erlaubt der Schneckengang dann wieder ein Zurückfedern der Messer, wobei sich das Spannen und Entspannen der Messer bei drehender Schneidförderschnecke periodisch wiederholt. Die Messer bestehen bevorzugt aus Federstahl.

Gemäß einer Ausgestaltung sind die Messer durch eine oder mehrere Federn gegen die Schneidförderschnecke gespannt. Dabei sind die Messer insbesondere bewegbar an der Halterung gelagert. Auch hierdurch ist sichergestellt, dass die Messer und die Schneidförderschnecke während des Schnitts gegeneinander gespannt sind, sodass eine Verbesserung des Schnittergebnisses erzielbar ist. Die Messer sind bei dieser Ausgestaltung vorzugsweise starr ausgebildet. Bevorzugt sind die Messer mittels der Federn an der Halterung befestigt. In diesem Fall handelt es sich bei den Federn insbesondere um Blattfedern. Alternativ können die Messer aber auch gelenkig an der Halterung gelagert sein. Die Federn sind vorzugsweise zwischen die Messer und die Halterung geschaltet.

Bevorzugt ist eine oder wenigstens eine Teilerspitze an der Halterung befestigt, die sich von der Fördereinrichtung aus gesehen insbesondere nach vorne erstreckt. Gemäß einer Weiterbildung sind quer zur Arbeitsrichtung mehrere Teilerspitzen im Abstand zueinander an der Halterung befestigt, die sich von der Fördereinrichtung aus gesehen insbesondere nach vorne erstrecken. Die Teilerspitzen sorgen z.B. dafür, dass schräg stehende Pflanzen bestimmten Bereichen der Fördereinrichtung zugeführt werden. Gemäß einer Ausgestaltung sind die oder einige der Teilerspitzen an den Messern befestigt oder einstückig mit diesen ausgebildet.

Gemäß einer Weiterbildung weisen die oder mehrere der Teilerspitzen jeweils eine Leiteinrichtung auf, die bezüglich der Arbeitsrichtung insbesondere in einem hinteren Bereich der jeweiligen Teilerspitze vorgesehen ist. Vorteilhaft ist jede der Leiteinrichtungen dabei auf einer in Förderrichtung hinteren Seite der jeweiligen Teilerspitze vorgesehen. Bevorzugt weist jede der Leiteinrichtungen zu der Schneckenachse der Schneidförderschnecke einen Winkel auf, der insbesondere zwischen 0° und 90°, vorzugsweise zwischen 20° und 70° liegt. Vorteilhaft verläuft jede der Leiteinrichtungen entlang einer Geraden, die einen Winkel mit der Schneckenachse der Schneidförderschnecke einschließt, der insbesondere zwischen 0° und 90°, vorzugsweise zwischen 20° und 70° liegt. Die jeweilige Gerade liegt vorzugsweise in einer senkrecht oder näherungsweise senkrecht zum Erdboden verlaufenden Ebene. Beispielsweise kann jede der Leiteinrichtungen und/oder Geraden zum Erdboden parallel oder gegenüber diesem geneigt verlaufen. Bevorzugt ist jede der Leiteinrichtungen und/oder Geraden entgegen der Arbeitsrichtung in Förderrichtung geneigt. Im Bereich der Leiteinrichtungen angeordnete Pflanzen können insbesondere von der Schneidförderschnecke erfasst und entlang der Leiteinrichtungen in Richtung auf die Schneckenachse der Schneidförderschnecke zu geleitet werden.

Gemäß einer Ausgestaltung ist jede der Leiteinrichtungen durch einen in Arbeitsrichtung hinteren Randbereich der jeweiligen Teilerspitze gebildet, der insbesondere entgegen der Arbeitsrichtung in Förderrichtung geneigt verläuft. Vorteilhaft handelt es sich bei diesem Randbereich um einen in Förderrichtung hinteren Randbereich der jeweiligen Teilerspitze. Das in Arbeitsrichtung vordere Ende jeder Leiteinrichtung geht bevorzugt in einen vorderen Randbereich der jeweiligen Teilerspitze über, der insbesondere bis zu der in Arbeitsrichtung vorderen Spitze der jeweiligen Teilerspitze verläuft. Bevorzugt verläuft jeder der vorderen Randbereiche von dem vorderen Ende der jeweiligen Leiteinrichtung aus, vorzugsweise in Förderrichtung, schräg zur Arbeitsrichtung nach vorne, vorteilhaft bis zur vorderen Spitze der jeweiligen Teilerspitze.

Gemäß einer Weiterbildung ist mit der Halterung wenigstens eine Führung fest verbunden. Insbesondere ist die Führung höher als die Fördereinrichtung und/oder die Schneckenachse gelegen. Bevorzugt sind die abgetrennten Pflanzen an oder mittels der Führung führbar. Insbesondere sind die abgetrennten Pflanzen von der Führung nach vorne abstützbar. Vorteilhaft sind die abgetrennten Pflanzen an oder mittels der Führung gegen ein Nachvornefallen abstützbar. Bevorzugt ist die Führung vor der Fördereinrichtung und/oder der Schneckenachse angeordnet, sodass die abgetrennten Pflanzen zwischen der Führung und der Fördereinrichtung und/oder der Schneidförderschnecke führbar sind. Durch die Führung kann ein Nachvornefallen der Pflanzen verhindert werden. Die Führung ist bevorzugt bezüglich des Erdbodens höher als die Fördereinrichtung und/oder die Schneckenachse gelegen. Im Fall der von vorne gesehen nach oben drehenden Schneidförderschnecke wirkt zwar auch diese einem Nachvornefallen der abgetrennten Pflanzen entgegen, mit der Führung ist aber ein besserer Schutz vor dem Nachvornefallen der abgetrennten Pflanzen erzielbar.

Gemäß einer Weiterbildung erstreckt sich die Führung in Förderrichtung und/oder entlang der Schneckenachse. Somit können die abgetrennten Pflanzen während ihres Transports und/oder ihrer Förderung von der Führung an einem Nachvornefallen gehindert werden. Bevorzugt ist die Führung mit mehreren Durchtrittsöffnungen versehen, die insbesondere in Förderrichtung und/oder entlang der Schneckenachse im Abstand zueinander angeordnet sind. Die Durchtrittsöffnungen dienen insbesondere dazu, dass Pflanzen von vorne in den Raum zwischen der Führung und der Fördereinrichtung und/oder der Schneidförderschnecke eintreten können und/oder hinter die Führung gelangen können.

Bevorzugt sind quer zur Arbeitsrichtung mehrere Führungselemente im Abstand zueinander an der Halterung befestigt, die insbesondere vor der Fördereinrichtung angeordnet sind und sich vorzugsweise nach oben erstrecken.

Gemäß einer Ausgestaltung umfasst die Führung die oder mehrere Führungselemente, die in Förderrichtung und/oder entlang der Schneckenachse insbesondere im Abstand zueinander angeordnet sind, wobei zwischen den Führungselementen vorzugsweise die Durchtrittsöffnungen vorgesehen sind.

Bevorzugt umfassen die Führungselemente jeweils einen sich nach oben erstreckenden und/oder vertikalen unteren Abschnitt und einen sich in Richtung der Schneckenachse erstreckenden und/oder horizontalen oberen Abschnitt, der auch als Führungsabschnitt bezeichnet werden kann und sich insbesondere an den unteren Abschnitt anschließt. Vorteilhaft sind die Führungselemente zumindest bereichsweise, insbesondere in ihren oberen Bereichen, in Förderrichtung und/oder in Richtung der Schneckenachse geneigt, gekrümmt und/oder abgewinkelt, vorzugsweise mit ihrem oberen Abschnitt. Der obere Abschnitt verhindert insbesondere ein Nachvornefallen der abgetrennten Pflanzen. Vorteilhaft sind die Führungselemente als Verlängerungen der Messer und/oder der Teilerspitzen gebildet. Hierdurch ist insbesondere eine Reduzierung an Bauteilen und Montageschritten bei der Fertigung der Pflückvorrichtung erzielbar. Bevorzugt umfassen die Führungselemente jeweils ein freies Ende, insbesondere ein oberes freies Ende. Das freie Ende jedes Führungselements ist vorzugsweise an seinem oberen Abschnitt vorgesehen. Bevorzugt ist jedes der Führungselemente unten, insbesondere mit seinem unteren Abschnitt, fest mit der Halterung verbunden und/oder jedes der Führungselemente geht unten, insbesondere mit seinem unteren Abschnitt, in eines der Messer und/oder in eine der Teilerspitzen über.

In Förderrichtung und/oder in Richtung der Schneckenachse überlappen bevorzugt jeweils zwei benachbarte der Führungselemente im Bereich der zwischen ihnen liegenden Durchtrittsöffnung. Vorzugsweise überlappen dabei die oberen Abschnitte der benachbarten Führungselemente. Bevorzugt bilden zwei benachbarte der Führungselemente jeweils ein Führungselementpaar. Vorteilhaft überlappen die Führungselemente jedes Führungselementpaars, insbesondere mit ihren oberen Abschnitten, im Bereich der zwischen ihnen liegenden Durchtrittsöffnung in Richtung der Schneckenachse. Bei jedem Führungselementpaar hintergreift insbesondere das in Förderrichtung hintere Führungselement das in Förderrichtung vordere Führungselement. Durch dieses Überlappen und/oder Hintergreifen ist es insbesondere vermeidbar, das abgetrennte Pflanzen durch die Durchtrittsöffnung hindurch nach vorne fallen können.

Bevorzugt ist an der Halterung eine oder wenigstens eine Hilfstransportvorrichtung vorgesehen und/oder befestigt, mittels welcher oder mit Hilfe derer die Pflanzen oberhalb der Fördereinrichtung erfassbar und insbesondere im Zusammenwirken mit der Fördereinrichtung transportierbar sind. Insbesondere ist die Hilfstransportvorrichtung vom Boden aus gesehen oberhalb der Fördereinrichtung angeordnet. Die Hilfstransportvorrichtung umfasst vorzugsweise einen Zugmittelförderer, wie z.B. einen Kettenförderer oder Riemenförderer, oder ist durch diesen gebildet. Der Zugmittelförderer weist bevorzugt mehrere entlang eines Zugmittels im Abstand zueinander angeordnete Finger oder Greifer auf, mittels welchen die Pflanzen in Förderrichtung führbar sind. Gemäß einer Alternative weist die Hilfstransportvorrichtung eine oder mehrere Förderschnecken auf. Die Hilfstransportvorrichtung ist z.B. mittels des Antriebs der Fördereinrichtung und/oder mittels eines separaten Antriebs antreibbar. Vorzugsweise sind die Hilfstransportvorrichtung und die Fördereinrichtung aber zusammen, d.h. durch den Antrieb der Fördereinrichtung, antreibbar.

Bevorzugt sind die Pflanzen, insbesondere in einem Übergabebereich, dem Pflückspalt zuführbar. Vorzugsweise sind die Pflanzen, insbesondere im Übergabebereich, von der Fördereinrichtung wegführbar und dem Pflückspalt zuführbar. Vorteilhaft sind die Pflanzen, insbesondere im Übergabebereich, mittels oder mit Hilfe einer Übergabevorrichtung dem Pflückspalt zuführbar. Bevorzugt sind die Pflanzen, insbesondere im Übergabebereich, mittels oder mit Hilfe der Übergabevorrichtung von der Fördereinrichtung wegführbar und dem Pflückspalt zuführbar. Die Übergabevorrichtung ist vorzugsweise durch die Hilfstransportvorrichtung und/oder durch die Fördereinrichtung und/oder durch eine zusätzliche oder separate Vorrichtung gebildet. Beispielsweise sind die Pflanzen mittels der Fördereinrichtung und/oder der Schneidförderschnecke dem Pflückspalt zuführbar. In diesem Fall ist die Übergabevorrichtung insbesondere durch die Fördereinrichtung und/oder die Schneidförderschnecke gebildet. Die Übergabevorrichtung ist bevorzugt mittels des Antriebs der Fördereinrichtung und/oder mittels des separaten Antriebs der Hilfstransportvorrichtung antreibbar. Alternativ kann für die Übergabevorrichtung aber auch ein separater Antrieb vorgesehen sein, mittels welchem die Übergabevorrichtung antreibbar ist.

An der Halterung ist vorzugsweise ein Trog befestigt, in den an dem Pflückspalt abgetrennte Früchte einbringbar sind. Das Einbringen der abgetrennten Früchte in den Trog kann aktiv z.B. mittels eines Förderers und/oder passiv z.B. mittels einer Schräge oder Rutsche erfolgen. Der Trog erstreckt sich in seiner Längsrichtung vorzugsweise quer oder näherungsweise quer zur Arbeitsrichtung und/oder vorzugsweise parallel oder näherungsweise parallel zum Erdboden. Ferner ist bevorzugt ein Trogförderer vorgesehen, mittels welchem die in den Trog eingebrachten Früchte innerhalb des Trogs transportierbar sind, und zwar insbesondere zu einer Entnahmestelle hin. Der Trogförderer ist z.B. eine drehbar an der Halterung gelagerte und in den Trog eingebrachte oder in diesen eingreifende Förderschnecke. Ferner sind mittels des Trogförderers die in den Trog eingebrachten Früchte insbesondere in dessen Längsrichtung transportierbar. An der Entnahmestelle greift z.B. ein Schrägförderer an, mittels welchem die Früchte dem Trog entnehmbar und dem Fahrzeug zuführbar sind. Der Trogförderer ist insbesondere mittels des Antriebs der Fördereinrichtung antreibbar ist. Alternativ kann der Trogförderer aber durch den separaten Antrieb der Hilfstransportvorrichtung und/oder den separaten Antrieb der Übergabevorrichtung und/oder durch einen anderen separaten Antrieb angetrieben werden.

Die Halterung ist insbesondere an ein Fahrzeug montiert oder bildet einen Teil desselben, wobei es sich bei dem Fahrzeug bevorzugt um ein Kraftfahrzeug handelt. Die Fahrtrichtung des Fahrzeugs fällt insbesondere mit der Arbeitsrichtung zusammen, wobei es sich bei dieser Fahrtrichtung vorzugsweise um die gewöhnliche Vorwärtsfahrtrichtung des Fahrzeugs handelt. Bevorzugt ist die Halterung vorne an dem Fahrzeug montiert. Bei der Pflückvorrichtung handelt es sich insbesondere um einen Pflückvorsatz.

Gemäß einer Ausgestaltung ist der Antrieb der Fördereinrichtung an oder in dem Fahrzeug vorgesehen. Alternativ kann der Antrieb der Fördereinrichtung aber auch an der Halterung befestigt sein. Entsprechendes gilt, sofern vorhanden, für den separaten Antrieb der Hilfstransportvorrichtung und/oder der Übergabevorrichtung und/oder des Trogförderers.

Bevorzugt betrifft die Offenbarung auch eine, insbesondere als Pflückvorsatz ausgebildete, Pflückanordnung, die aus mehreren erfindungsgemäßen Pflückvorrichtungen zusammengesetzt ist, deren Halterungen zusammen eine Tragkonstruktion bilden oder an dieser vorgesehen und/oder befestigt sind. Insbesondere können die Halterungen der Pflückvorrichtungen durch eine gemeinsame Halterung gebildet sein, welche vorzugsweise die Tragkonstruktion bildet. Die Tragkonstruktion und/oder die gemeinsame Halterung ist bevorzugt an einem Fahrzeug befestigt, welches insbesondere ein Kraftfahrzeug ist. Vorzugsweise ist Tragkonstruktion und/oder die gemeinsame Halterung vorne an dem Fahrzeug befestigt. Die Pflückvorrichtungen weisen bevorzugt dieselbe Arbeitsrichtung auf und sind insbesondere quer zu dieser nebeneinander angeordnet. Insbesondere sind die Pflückvorrichtungen horizontal nebeneinander angeordnet. Die Pflückvorrichtungen sind vorzugsweise gleich oder im Wesentlichen gleich aufgebaut. Jede der Pflückvorrichtungen kann gemäß allen im Zusammenhang mit der erfindungsgemäßen Pflückvorrichtung erläuterten Ausgestaltungen weitergebildet sein.

Die Offenbarung betrifft ferner die Verwendung einer erfindungsgemäßen Pflückvorrichtung und/oder einer Pflückanordnung zum reihenunabhängigen Ernten von Pflanzen. Anstelle des Ausdrucks "reihenunabhängig" ist auch der Ausdruck "reihenlos" gebräuchlich. Die Pflückvorrichtung und/oder die Pflückanordnung kann gemäß allen beschriebenen Ausgestaltungen weitergebildet sein. Bevorzugt werden mehrere, quer oder näherungsweise quer zur Arbeitsrichtung nebeneinander angeordnete Pflanzen gleichzeitig von der oder den Fördereinrichtungen erfasst. Vorzugsweise sind die Pflanzen in mehreren Pflanzenreihen angeordnet, wobei die Arbeitsrichtung insbesondere schräg oder quer zur Richtung der Pflanzenreihen verläuft. Selbstverständlich ist es aber auch möglich, dass die Arbeitsrichtung in Richtung der Pflanzenreihen verläuft. Die Pflanzen sind vorzugsweise Maispflanzen, sodass die Früchte insbesondere Maiskolben sind. Alternativ können die Pflanzen aber auch Sonnenblumen sein, sodass die Körbe oder Blütenstände der Sonnenblumen die Früchte bilden.

Die Erfindung betrifft ferner ein Verfahren zum Ernten von Früchte umfassenden Pflanzen, insbesondere zum reihenunabhängigen Ernten der Pflanzen, wobei eine oder wenigstens eine einen vorderen Erfassungsbereich umfassende Fördereinrichtung relativ zu den Pflanzen in einer Arbeitsrichtung bewegt und dadurch mit ihrem

Erfassungsbereich in Kontakt mit den Pflanzen gebracht wird, sodass diese mittels der Fördereinrichtung erfasst und in einer oder wenigstens einer Förderrichtung gefördert werden, wonach die Pflanzen einem Pflückvorgang zum Abtrennen der Früchte unterzogen werden, und wobei die Fördereinrichtung eine um eine quer oder im Wesentlichen quer oder näherungsweise quer zur Arbeitsrichtung ausgerichtete Schneckenachse drehende Schneidförderschnecke umfasst, mittels welcher die Pflanzen erfasst und entlang der Schneckenachse gefördert werden. Die Förderrichtung verläuft somit in Richtung der Schneckenachse. Da es sich bei der Schneckenachse bevorzugt um eine gerade oder im Wesentlichen gerade oder näherungsweise gerade Achse handelt, verläuft die Förderrichtung geradlinig oder im Wesentlichen geradlinig oder näherungsweise geradlinig. Da die Schneckenachse ferner quer oder im Wesentlichen quer oder näherungsweise quer zur Arbeitsrichtung ausgerichtet ist, verläuft die Förderrichtung auch quer oder im Wesentlichen quer oder näherungsweise quer zur Arbeitsrichtung. Vorteilhaft werden die Pflanzen, vorzugsweise die abgetrennten Pflanzen, mittels der Schneidförderschnecke, bevorzugt im Erfassungsbereich, entlang der Schneckenachse der Schneidförderschnecke transportiert und/oder gefördert, insbesondere in Förderrichtung. Eine Bewegung der Fördereinrichtung und/oder der Schneidförderschnecke in Arbeitsrichtung entspricht insbesondere einer Bewegung der Fördereinrichtung und/oder der Schneidförderschnecke nach vorne.

Das erfindungsgemäße Verfahren wird bevorzugt mit der erfindungsgemäßen Pflückvorrichtung und/oder mit der Pflückanordnung durchgeführt. Insbesondere kann das erfindungsgemäße Verfahren gemäß allen im Zusammenhang mit der erfindungsgemäßen Pflückvorrichtung und/oder mit der Pflückanordnung erläuterten Ausgestaltungen weitergebildet sein. Ferner kann die erfindungsgemäße Pflückvorrichtung und/oder die Pflückanordnung gemäß allen im Zusammenhang mit dem erfindungsgemäßen Verfahren erläuterten Ausgestaltungen weitergebildet sein.

Gemäß einer Weiterbildung werden die Pflanzen an der Schneidförderschnecke durchtrennt und/oder abgetrennt, insbesondere bevor die Pflanzen dem Pflückvorgang unterzogen werden. Zu diesem Durchtrennen und/oder Abtrennen werden die Pflanzen bevorzugt, insbesondere mittel der Schneidförderschnecke, entlang um die Schneckenachse gekrümmter Schneiden geführt und/oder geschnitten.

Vorteilhaft werden durch das Zusammenwirken der Schneidförderschnecke mit mehreren gekrümmten und die Schneidförderschnecke zumindest teilweise umgreifenden Messern die Pflanzen durchtrennt und/oder abgetrennt, insbesondere bevor die Pflanzen dem Pflückvorgang unterzogen werden. Die Messer umfassen insbesondere die Schneiden. Durch das Durchtrennen und/oder Abtrennen der Pflanzen werden diese insbesondere von ihren im Erdboden sitzenden Wurzeln getrennt. Vorzugsweise werden die abgetrennten Pflanzen mittels der Schneidförderschnecke entlang der Schneckenachse gefördert.

Die Schneckenachse ist insbesondere parallel oder annähernd parallel zum Erdboden ausgerichtet. Ferner ist die Arbeitsrichtung insbesondere parallel oder annähernd parallel zum Erdboden ausgerichtet.

Die Schneidförderschnecke dreht von vorne gesehen vorzugsweise nach oben und/oder wird vorzugsweise nach oben drehend angetrieben. Dieses Merkmal kann insbesondere auch derart formuliert werden, dass die Schneidförderschnecke in Gegenrichtung zur Arbeitsrichtung dreht und/oder drehend angetrieben wird.

Beim Pflückvorgang werden die Früchte von den Pflanzen getrennt. Dazu werden die Pflanzen insbesondere einem Pflückspalt zugeführt und durch diesen unter Abtrennen der Früchte hindurch gezogen. Bei den Pflanzen handelt es sich bevorzugt um Maispflanzen, sodass es sich bei den Früchten insbesondere um Maiskolben handelt. Alternativ können die Pflanzen aber auch Sonnenblumen sein, sodass die Körbe oder Blütenstände der Sonnenblumen die Früchte bilden.

Die Erfindung wird nachfolgend anhand bevorzugter Ausführungsformen unter Bezugnahme auf die Zeichnung beschrieben. In der Zeichnung zeigen:
- Fig. 1:: eine perspektivische Darstellung eines Erntefahrzeugs mit einem Pflückvorsatz,
- Fig. 2:: eine andere perspektivische Darstellung des Erntefahrzeugs nach Fig. 1,
- Fig. 3:: einen mit A gekennzeichneten Ausschnitt aus Fig. 2,
- Fig. 4:: eine perspektivische Darstellung einer der aus Fig. 3 ersichtlichen Pflückvorrichtungen gemäß einer ersten Ausführungsform der Erfindung,
- Fig. 5:: eine Draufsicht auf die Pflückvorrichtung nach Fig. 4,
- Fig. 6:: eine Vorderansicht der Pflückvorrichtung nach Fig. 4,
- Fig. 7:: einen Schnitt durch die Pflückvorrichtung nach Fig. 4 entlang der aus Fig. 6 ersichtlichen Schnittlinie B-B,
- Fig. 8:: eine perspektivische Darstellung des Pflückvorsatzes nach Fig. 1 in einer Transportstellung,
- Fig. 9:: einen mit C gekennzeichneten Ausschnitt aus Fig. 8,
- Fig. 10:: eine perspektivische Ansicht einer Pflückvorrichtung gemäß einer zweiten Ausführungsform der Erfindung,
- Fig. 11:: eine perspektivische Ansicht einer Pflückvorrichtung gemäß einer dritten nicht unter den beanspruchten Erfindungsgegenstand fallenden Ausführungsform,
- Fig. 12:: eine perspektivische Ansicht einer Pflückvorrichtung gemäß einer vierten Ausführungsform der Erfindung,
- Fig. 13:: eine perspektivische Darstellung einer Pflückvorrichtung gemäß einer fünften Ausführungsform der Erfindung,
- Fig. 14:: einen Schnitt durch die Schneidförderschnecke entlang der aus Fig. 6 ersichtlichen Schnittlinie D-D gemäß einer Modifikation der ersten Ausführungsform,
- Fig. 15: eine abschnittsweise Vorderansicht einer Schneidförderschnecke einer Pflückvorrichtung gemäß einer sechsten Ausführungsform der Erfindung,
- Fig. 16: eine Ansicht des aus Fig. 15 ersichtlichen Abschnitts in Richtung des Pfeils J,
- Fig. 17: eine Schnittansicht der Schneidförderschnecke entlang der aus Fig. 16 ersichtlichen Schnittlinie K-K,
- Fig. 18: eine teilweise Darstellung einer Pflückvorrichtung gemäß einer siebten Ausführungsform der Erfindung in Draufsicht und
- Fig. 19:: eine schematische Draufsicht auf eine erfindungsgemäße Pflückvorrichtung und mehrere Pflanzenreihen.

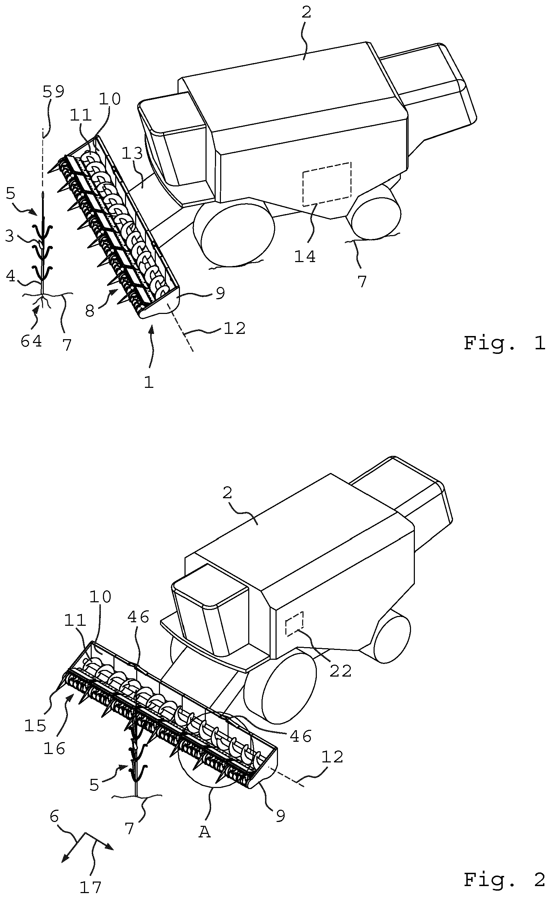

Aus den Fig. 1 und 2 sind perspektivische Ansichten einer Pflückanordnung in Form eines Pflückvorsatzes 1 ersichtlich, der vorne an einem Erntefahrzeug 2 befestigt ist. Der Pflückvorsatz 1 dient zum Pflücken von Früchten 3, die an länglichen Stängeln 4 von Pflanzen 5 sitzen, die mit Wurzeln 64 im Erdboden 7 verankert sind. Die Stängel 4 weisen jeweils eine ausgezeichnete Längsrichtung 59 auf, die sich vom Erdboden 7 aus nach oben erstreckt. Der Pflückvorsatz 1 wird mittels des Erntefahrzeugs 2 in einer Arbeitsrichtung 6 entlang des Erdbodens 7 bewegt, sodass die Pflanzen 5 mit einer Fördereinheit 8 des Pflückvorsatzes 1 in Kontakt treten und von dieser erfasst werden. Die Arbeitsrichtung 6 fällt dabei mit der gewöhnlichen Vorwärtsfahrtrichtung des Erntefahrzeugs 2 zusammen. Der Pflückvorsatz 1 umfasst eine Tragkonstruktion 9, an der ein Trog 10 befestigt ist, in welchem eine Querförderschnecke 11 angeordnet ist. Die Querförderschnecke 11 ist um eine quer zur Arbeitsrichtung 6 und parallel zum Erdboden 7 verlaufende Achse 12 drehbar gelagert und transportiert in den Trog 10 eingebrachte Früchte 3 von beiden Seiten zur Mitte des Trogs 10, wo die Früchte 3 einem Schrägförderer 13 des Erntefahrzeugs 2 übergeben werden, der die Früchte 3 einem Innenraum 14 des Erntefahrzeugs 2 zuführt. Der Pflückvorsatz 1 weist mehrere Teilerspitzen 15 auf, die jeweils einem Abschnitt oder Segment 16 des Pflückvorsatzes 1 zugeordnet sind. Gemäß dieser Ausführungsform weist der Pflückvorsatz 1 acht Abschnitte 16 und acht Teilerspitzen 15 auf, wobei diese Anzahl nicht einschränkend zu verstehen ist. Die Abschnitte 16 bilden jeweils eine Pflückvorrichtung gemäß einer ersten Ausführungsform der Erfindung und sind in einer quer zur Arbeitsrichtung 6 und parallel zum Erdboden 7 verlaufen Querrichtung 17 nebeneinander angeordnet. Dabei sind die Pflückvorrichtungen 16 bevorzugt identisch oder im Wesentlichen identisch aufgebaut. Die Querrichtung 17 verläuft in Fahrzeugquerrichtung des Erntefahrzeugs 2.

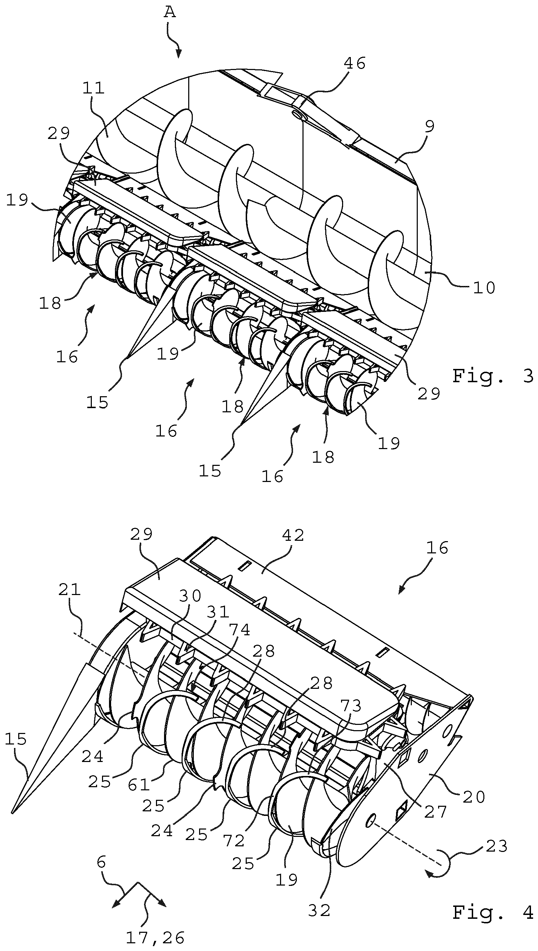

Aus Fig. 3 ist eine vergrößerte Ansicht des in Fig. 2 mit A gekennzeichneten Ausschnitts ersichtlich, wobei jede der Pflückvorrichtungen 16 eine Fördereinrichtung 18 aufweist. Die Fördereinrichtungen 18 umfassen dabei jeweils eine Schneidförderschnecke 19 und bilden zusammen die Fördereinheit 8.

Aus den Fig. 4 bis 7 sind unterschiedliche Ansichten von einer der Pflückvorrichtungen 16 ersichtlich, wobei Fig. 4 eine perspektivische Ansicht dieser Pflückvorrichtung 16 zeigt. Die Pflückvorrichtung 16 umfasst eine an der Tragkonstruktion 9 befestigte Halterung 20, an der die zugehörige Schneidförderschnecke 19 um eine Schneckenachse 21 drehbar gelagert ist. Die Schneidförderschnecke 19 wird mittels eines Antriebs 22 um die Schneckenachse 21 in Richtung des Pfeils 23 gedreht, sodass die Schneidförderschnecke 19 von vorne gesehen nach oben dreht. Der Antrieb 22 ist gemäß dieser Ausführungsform im Erntefahrzeug 2 vorgesehen und in Fig. 2 schematisch angedeutet. Die Schneidförderschnecke 19 weist an ihrem Außenumfang radiale Vorsprünge 24 auf, die zum Anheben von schräg stehenden oder liegenden Pflanzen dienen. Ferner sind entlang der Schneckenachse 21 mehrere Messer 25 an der Halterung 20 befestigt, welche gekrümmt ausgebildet sind und die Schneidförderschnecke 19 teilweise umgreifen. Von der Schneidförderschnecke 19 erfasste Pflanzen 5 werden mittels der Schneidförderschnecke 19 in Querrichtung 17 gegen die Messer 25 geführt, sodass die Stängel 4 der Pflanzen 5 durch das Zusammenwirken der Schneidförderschnecke 19 mit den Messern 25 durchtrennt werden. Die Förderrichtung 26 der Schneidförderschnecke 19 fällt hierbei mit der Querrichtung 17 zusammen. Die abgeschnittenen Pflanzen 5 werden dann mittels der Schneidförderschnecke 19 weiter in Förderrichtung 26 bis zu einem Übergabebereich 27 transportiert, in dem die abgeschnittenen Pflanzen 5 in einen hinteren Bereich der Pflückvorrichtung 16 transportiert werden.

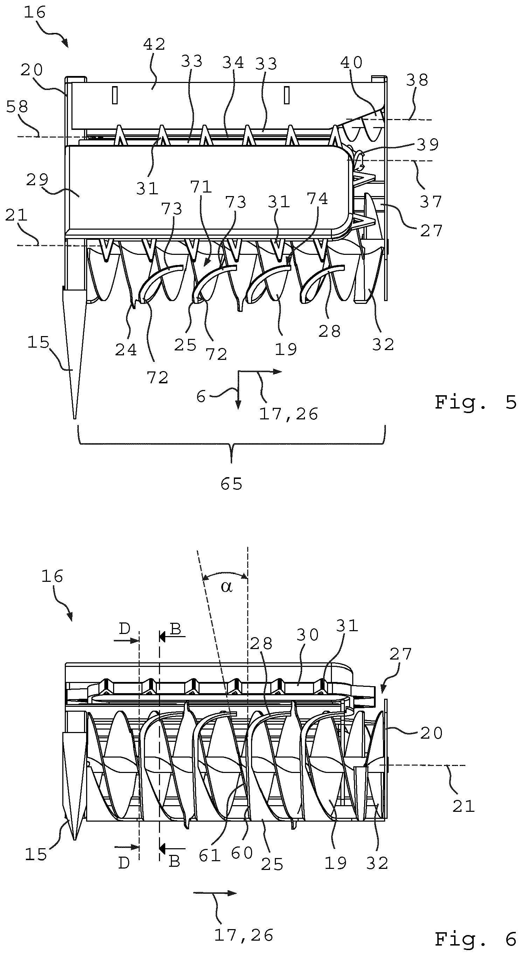

Damit die abgeschnittenen Pflanzen 5 nicht nach vorne herausfallen, sind mehrere entlang der Schneckenachse 21 im Abstand zueinander angeordnete Führungselemente 28 vorgesehen, die sich nach oben erstrecken und in Förderrichtung 26 gekrümmt oder abgewinkelt sind. Die Führungselemente 28 sind an der Halterung 3 befestigt und vor der Schneckenachse 21 der Schneidförderschnecke 19 und/oder vor der Schneidförderschnecke 19 angeordnet. Zwischen den Führungselementen 28 sind Durchtrittsöffnungen 71 vorgesehen (siehe Fig. 5), durch welche hindurch die Pflanzen 5 in den Raum zwischen den Führungselementen 28 und der Schneidförderschnecke 19 eintreten können. Jedes der Führungselemente 28 weist einen sich nach oben erstreckenden unteren Abschnitt 72 und einen sich in Richtung der Schneckenachse 21 erstreckenden und höher als diese gelegenen oberen Abschnitt 73 auf, der in Förderrichtung 26 gegenüber dem unteren Abschnitt 72 abgewinkelt ist. Die Durchtrittsöffnungen 71 sind dabei insbesondere zwischen den oberen Abschnitten 73 der Führungselemente 28 vorgesehen. Durch die Führungselemente 28, insbesondere durch die oberen Abschnitte 73 der Führungselemente 28, wird somit eine sich entlang der Schneckenachse 21 erstreckende, vor der Schneckenachse 21 angeordnete und höher als diese gelegene Führung 74 gebildet, welche die abgeschnittenen Pflanzen 5 daran hindert, nach vorne zu fallen. Die abgeschnittenen Pflanzen 5 werden somit zwischen der Führung 74 und der Schneidförderschnecke 19 geführt, wobei die Führung 74 die abgeschnittenen Pflanzen 5 in Berührung mit der Schneidförderschnecke 19 hält. Gemäß dieser Ausführungsform sind die Führungselemente 28 als Verlängerung der Messer 25 gebildet, wobei die unteren Abschnitte 72 in die Messer 25 übergehen.

Der Transport der abgeschnittenen Pflanzen 5 in Förderrichtung 26 wird ferner durch eine Hilfstransportvorrichtung 29 unterstützt, die hier als Kettenförderer ausgebildet ist und mehrere an einer umlaufenden Kette 30 in Abstand zueinander angeordnete Finger 31 aufweist. Die Hilfstransportvorrichtung 29 wird ebenfalls durch den Antrieb 22 angetrieben.

Der Schneckengang 61 der Schneidförderschnecke 19 ist derart gewendelt, dass bei einer Drehung der Schneidförderschnecke 19 um die Schneckenachse 21 in Richtung des Pfeils 23 die Pflanzen 5 in Förderrichtung 26 transportiert werden. Am Ende des Schneckengangs 61 in Transportrichtung 26 weist die Schneidförderschnecke 19 aber einen oder wenigstens einen entgegengesetzt gewendelten Schneckenflügel 32 auf, sodass die Pflanzen 5 an diesem Schneckenflügel 32 angehoben und dem Übergabebereich 27 zugeführt werden. Ferner unterstützt die Hilfstransportvorrichtung 29 im Übergabebereich 27 einen Transport der Pflanzen 5 nach hinten.

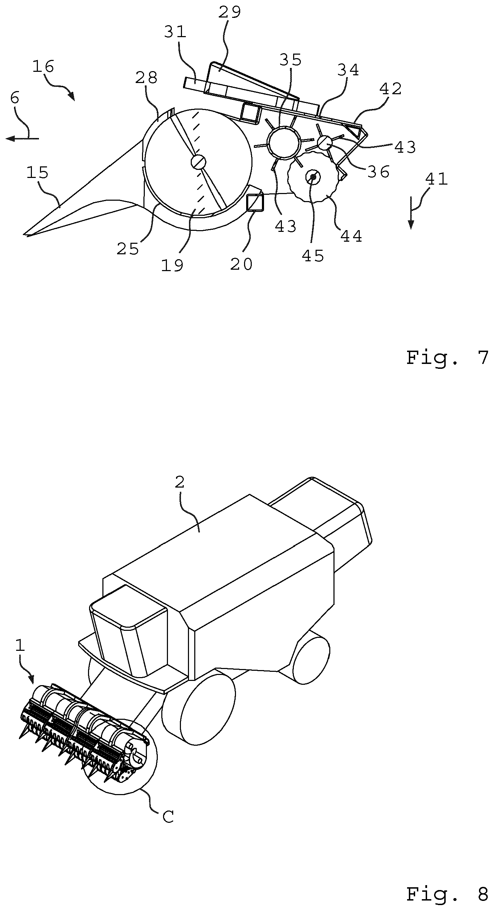

Aus Fig. 5 ist eine Draufsicht auf die Pflückvorrichtung 16 ersichtlich, wobei im hinteren Bereich der Pflückvorrichtung 16 zwei Pflückplatten 33 an der Halterung 20 befestigt sind, die einen zwischen ihnen liegenden, länglichen und sich in Querrichtung 17 erstreckenden Pflückspalt 34 begrenzen, dessen Längsrichtung 58 parallel oder näherungsweise parallel zur Schneckenachse 21 verläuft. Unterhalb des Pflückspalts 34 sind zwei Pflückwalzen 35 und 36 angeordnet (siehe Fig. 7), die jeweils um eine in Querrichtung 17 verlaufende Drehachse 37 bzw. 38 drehbar an der Halterung 20 gelagert sind. Die dem Übergabebereich 27 zugewandten Enden der Pflückwalzen 35 und 36 sind mit Schneckenwindungen 39 bzw. 40 versehen, sodass die im Übergabebereich 27 nach hinten transportierten Pflanzen 5 durch die Schneckenwindungen 39 und 40 entgegen der Förderrichtung 26 eingezogen und dem Pflückspalt 34 zugeführt werden. Der weitere Transport der Pflanzen entlang des Pflückspalts 34 entgegen der Förderrichtung 26 erfolgt dann durch die Pflückwalzen 35, 36 und/oder durch die Hilfstransportvorrichtung 29. Gleichzeitig werden die Pflanzen 5 mittels der Pflückwalzen 35 und 36 nach unten, d.h. in Richtung des Pfeils 41 (siehe Fig. 7), durch den Pflückspalt 34 hindurch gezogen, wobei die Früchte 3 an den pflückspaltseitigen Rändern der Pflückplatten 33 von den Pflanzen 5 abgestreift werden, da zwar die Stängel 4, nicht aber die Früchte 3 durch den Pflückspalt 34 hindurch passen. Die abgetrennten Früchte 3 rutschen dann entlang einer an der Halterung 20 vorgesehenen schrägen Platte 42 nach hinten in den Trog 10 und werden dort mittels der Querförderschnecke 11 dem Schrägförderer 13 zugeführt.

In Fig. 5 ist ferner der Erfassungsbereich 65 der Schneidförderschnecke 19 angedeutet, der sich über die oder nahezu über die gesamte Breite der Schneidförderschnecke 19 erstreckt.

Aus Fig. 6 ist eine Vorderansicht der Pflückvorrichtung 16 ersichtlich, wobei ein Schnittwinkel α zwischen dem Schneckengang 61 und den Schneiden 60 der Messer 25 gezeigt ist.

Fig. 7 zeigt eine Schnittansicht der Pflückvorrichtung 16 entlang der Schnittlinie B-B aus Fig. 6, wobei zu erkennen ist, dass die Pflückwalzen 35 und 36 jeweils mit radialen Vorsprüngen 43 versehen sind, mittels derer die Stängel 4 der Pflanzen 5 ergriffen und in Richtung 41 nach unten durch den Pflückspalt 34 hindurch gezogen werden. Ferner sind unterhalb der Pflückwalzen 35 und 36 Messerscheiben 44 angeordnet, die um eine in Querrichtung 17 verlaufende Drehachse 45 gedreht werden. Die Pflanzen und/oder deren Stängel werden mittels der Messerscheiben 44 geschnitten und/oder aufgespleißt, während sie durch den Pflückspalt 34 hindurch gezogen werden. Die Messerscheiben 45 sowie die Pflückwalzen 35 und 36 werden mittels des Antriebs 22 um ihre jeweilige Drehachse gedreht.

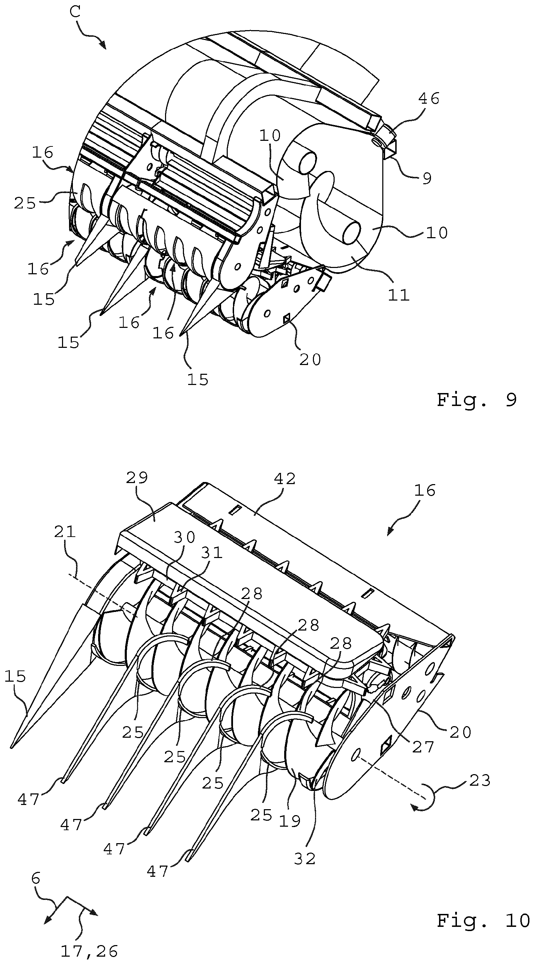

Aus Fig. 8 ist eine perspektivische Ansicht des Pflückvorsatzes 1 in einem zusammengeklappten Zustand ersichtlich, in den der Pflückvorsatz 1 zu Transportzwecken überführt werden kann. Somit kann das Erntefahrzeug 2 mit dem Pflückvorsatz 1 z.B. auf öffentlichen Straßen fahren, auf denen eine maximale Fahrzeugbreite nicht überschritten werden darf. Aus Fig. 9 ist eine vergrößerte Darstellung des mit C gekennzeichneten Ausschnitts aus Fig. 8 ersichtlich, wobei am Pflückvorsatz 1 Scharniere 46 vorgesehen sind (siehe auch Fig. 2), sodass die beiden äußeren Abschnitte 16 jeder Seite auf die mittleren Abschnitte 16 umgeklappt werden können.

Unter Bezugnahme auf die Fig. 10 bis 18 werden andere Ausführungsformen der erfindungsgemäßen Pflückvorrichtung beschrieben, wobei für ähnliche oder identische Merkmale dieselben Bezugszeichen wie bei der ersten Ausführungsform verwendet werden. Ferner werden in den Beschreibungen der anderen Ausführungsformen lediglich Unterschiede zu der ersten Ausführungsform betont, sodass zur weiteren Beschreibung der anderen Ausführungsformen auf die Beschreibung der ersten Ausführungsform verwiesen wird.

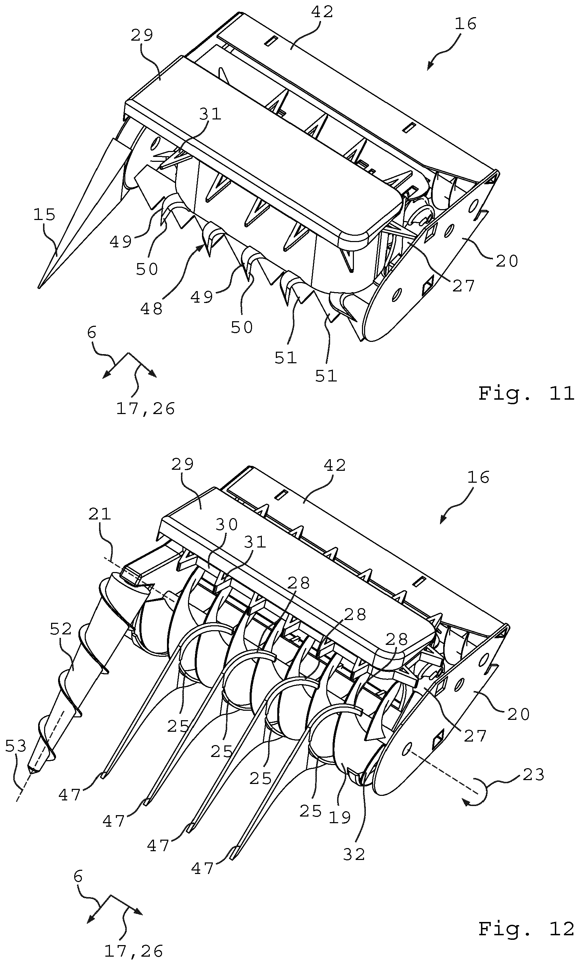

Aus Fig. 10 ist eine Pflückvorrichtung 16 gemäß einer zweiten Ausführungsform der Erfindung ersichtlich, wobei im Unterschied zur ersten Ausführungsform zusätzliche Teilerspitzen 47 an der Halterung 20 befestigt sind, die ein Anheben von schrägstehenden Pflanzen unterstützen. Die an der Schneidförderschnecke 19 gemäß der ersten Ausführungsform vorgesehenen radialen Vorsprünge 24 können somit entfallen. Aus Fig. 11 ist eine perspektivische Ansicht einer Pflückvorrichtung 16 gemäß einer dritten Ausführungsform ersichtlich, die nicht unter den Erfindungsgegenstand fällt, wobei die Fördereinrichtung 18 durch einen Greifschneider 48 gebildet ist. Der Greifschneider 48 ist als Kettenförderer ausgebildet, an dessen Kette mehrere im Abstand zueinander angeordnete Greifer 49 vorgesehen sind, die jeweils eine Schneide 50 aufweisen. Die Greifer 49 ergreifen die Stängel der Pflanzen und transportieren diese in Querrichtung 17, wobei die Schneiden 50 mit an der Halterung 20 befestigten Messern 51 zum Durchtrennen der Stängel zusammenwirken. Danach werden die abgeschnittenen Pflanzen mittels der Greifer 49 und der Finger 31 dem Übergabebereich 27 zugeführt, wobei die Förderrichtung 26 des Greifschneiders 48 mit der Querrichtung 17 zusammenfällt. Danach werden die Pflanzen mittels der Greifer 49 und der Finger 31 nach hinten zum Pflückspalt 34 zugeführt.

Aus Fig. 12 ist eine perspektivische Ansicht einer Pflückvorrichtung 16 gemäß einer vierten Ausführungsform der Erfindung ersichtlich, wobei die seitlich außenliegende Teilerspitze als konusförmige Schnecke 52 ausgebildet ist. Die Schnecke 52 ist um eine Drehachse 53 drehbar an der Halterung 20 gelagert und wird durch den Antrieb 22 angetrieben, sodass die konusförmige Schnecke 52 um die Drehachse 53 dreht. Die konusförmige Schnecke 52 dient zum Anheben liegender Pflanzen und wird auch als Lagermaisheber bezeichnet. Abgesehen davon entspricht die vierte Ausführungsform der zweiten Ausführungsform.

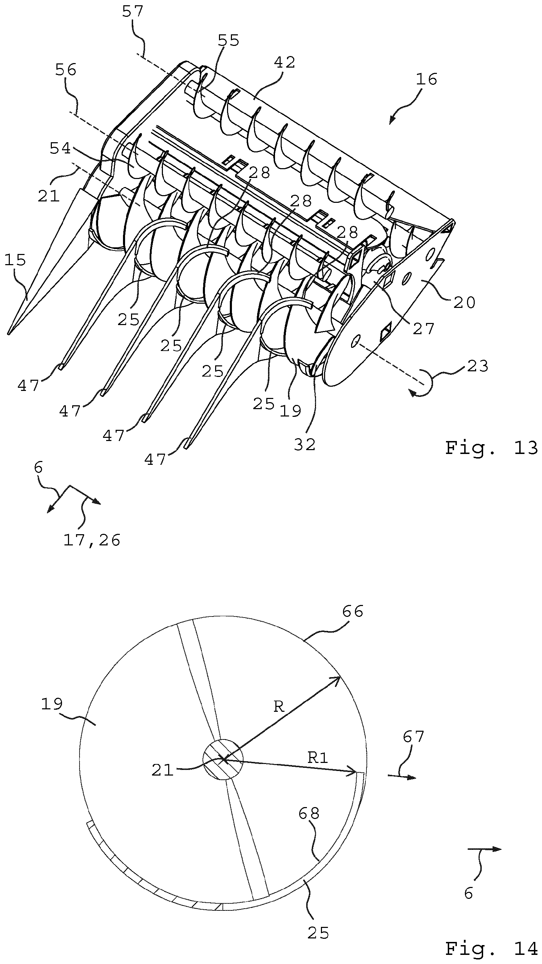

Aus Fig. 13 ist eine Pflückvorrichtung 16 gemäß einer fünften Ausführungsform der Erfindung ersichtlich, wobei die Hilfstransportvorrichtung 29 durch mehrere Förderschnecken 54, 55 gebildet ist. Dabei sind die Förderschnecken 54 und 55 jeweils um eine Drehachse 56 bzw. 57 drehbar an der Halterung 20 gelagert. Die Förderschnecken 54 und 55 werden durch den Antrieb 22 angetrieben und drehen somit um ihre Drehachsen 56 bzw. 57. Dabei unterstützt die Förderschnecke 54 die durch die Schneidförderschnecke 19 gebildete Fördereinrichtung 18, wohingegen die Förderschnecke 55 die im Pflückspalt sitzenden Pflanzen in Längsrichtung des Pflückspalts transportiert und zwar in einer der Förderrichtung 26 der Fördereinrichtung 18 entgegengesetzten Richtung.

Aus Fig. 14, welche eine Modifikation der ersten Ausführungsform veranschaulicht, ist eine Schnittansicht durch die Schneidförderschnecke 19 entlang der aus Fig. 6 ersichtlichen Schnittlinie D-D ersichtlich. Im Gegensatz zur ersten Ausführungsform sind die Messer 25 federelastisch ausgebildet und weisen im entspannten Zustand eine stärkere Krümmung um die Schneckenachse 21 auf, als eine, insbesondere fiktive, Mantelfläche 66 der Schneidförderschnecke 19. Somit ist der Abstand R1 zwischen der Schneckenachse 21 und den freien Enden der entspannten Messer 25 kleiner als der Abstand R zwischen der Schneckenachse 21 und dem Außenrand des Schneckengangs 61, der auf der Mantelfläche 66 liegt, deren Radius dem Abstand R entspricht. Dies hat zur Folge, dass jedes der Messer 25 in Richtung des Pfeils 67, welche bezüglich der Schneckenachse 21 in etwa radial verläuft, elastisch verformt wird, wenn der Schneckengang 61 aufgrund der Drehung der Schneidförderschnecke 19 die der Schneidförderschnecke 19 zugewandte Innenfläche 68 des jeweiligen Messers 25 überstreicht. Nachdem die Innenfläche 68 von dem Schneckengang 61 überstrichen worden ist, kehrt das jeweilige Messer 25 aufgrund seiner Elastizität wieder in die aus Fig. 14 ersichtliche Lage zurück. Die radialen Vorsprünge 24 sind gemäß dieser Modifikation weggelassen, sie können aber vorhanden sein. Entsprechendes gilt für die Führungselemente 28.

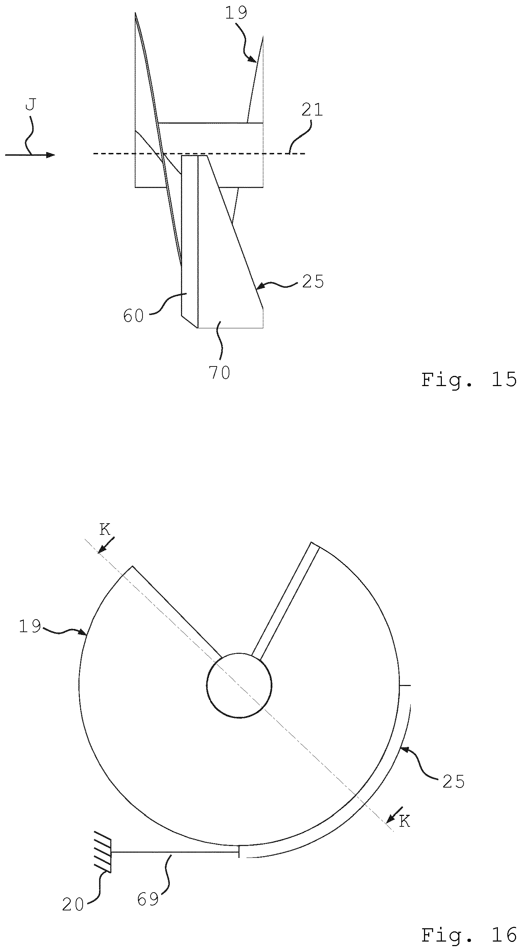

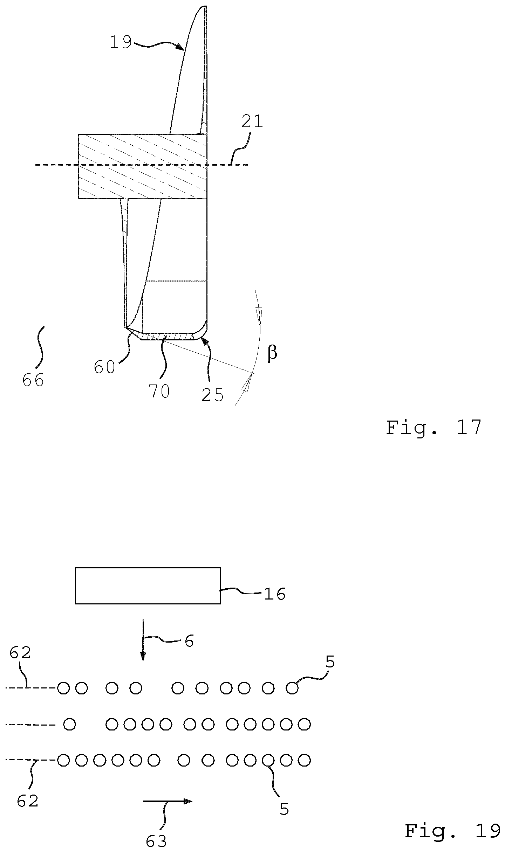

Aus Fig. 15 ist eine abschnittsweise Vorderansicht einer Schneidförderschnecke 19 einer Pflückvorrichtung gemäß einer sechsten Ausführungsform der Erfindung ersichtlich, wobei Fig. 16 eine Seitenansicht des in Fig. 15 dargestellten Abschnitts in Richtung des Pfeils J zeigt. Ferner zeigt Fig. 17 eine Schnittansicht der Schneidförderschnecke 19 entlang der in Fig. 16 dargestellten Schnittlinie K-K. Gemäß der sechsten Ausführungsform sind die Messer 25 jeweils mittels einer Blattfeder 69 an der lediglich schematisch dargestellten Halterung 20 befestigt, wobei die Messer 25 mittels der Blattfedern 69 gegen die Schneidförderschnecke 19 gespannt sind.

Die Messer 25 umfassen ferner jeweils einen tragenden Teil 70 und eine Schneide 60, die in Richtung der Schneckenachse 21 von dem tragenden Teil 70 vorsteht. Dabei sind die Schneiden 60 gegenüber den tragenden Teilen 70 in Richtung auf die Schneckenachse 21 abgewinkelt, sodass die Schneiden 60 mit einer, insbesondere fiktiven, Mantelfläche 66 der Schneidförderschnecke 19 jeweils einen Freiwinkel β einschließen. Ein solcher Freiwinkel kann auch bei den anderen Ausführungsformen vorgesehen sein.

Zwar ist in den Fig. 15 bis 17 exemplarisch lediglich eines der Messer dargestellt, für die anderen Messer ergeben sich aber entsprechende Ansichten.

Aus Fig. 18 ist eine schematische und lediglich teilweise Darstellung einer Pflückvorrichtung 16 gemäß einer siebten Ausführungsform der Erfindung in Draufsicht ersichtlich, wobei zusätzliche Teilerspitzen 47 an der Halterung 20 befestigt sind. Die siebte Ausführungsform basiert somit insbesondere auf der zweiten Ausführungsform. Im Unterschied zur zweiten Ausführungsform umfassen die Teilerspitzen 47 an ihren hinteren Bereichen jeweils eine Leiteinrichtung 75, mittels welcher die Pflanzen 5 zur Schneidförderschnecke 19 hin und/oder in die Schnecke 19 hinein (d.h. zwischen deren Schneckenflügel) geleitet werden können. Jede Leiteinrichtung 75 liegt auf einer Geraden 76, die in einem Winkel γ zur Schneckenachse 21 verläuft, der hier bei ca. 55° liegt (in Fig. 18 ist der Winkel γ zwischen der Geraden 76 und einer zur Schneckenachse 21 parallelen Geraden 78 eingezeichnet). Gemäß der siebten Ausführungsform sind die Leiteinrichtungen 75 jeweils durch einen in Arbeitsrichtung 6 hinteren und in Förderrichtung 26 hinteren Randbereich der jeweiligen Teilerspitze 47 gebildet. Eine im Bereich von einer der Leiteinrichtungen 75 angeordnete Pflanze 5 kann somit, sobald sie in den Erfassungsbereich der Schnecke 19 gelangt, von der Schnecke 19 erfasst und entlang der jeweiligen Leiteinrichtung 75 auf die Schneckenachse 21 zu geleitet werden, wonach die Pflanze 5 mittels der Schnecke 19 weiter in Förderrichtung 26 transportiert wird, was durch den gestichelten Pfeil 77 angedeutet ist. Abgesehen davon, stimmt die siebte Ausführungsform insbesondere mit oder im Wesentlichen mit der zweiten Ausführungsform überein.

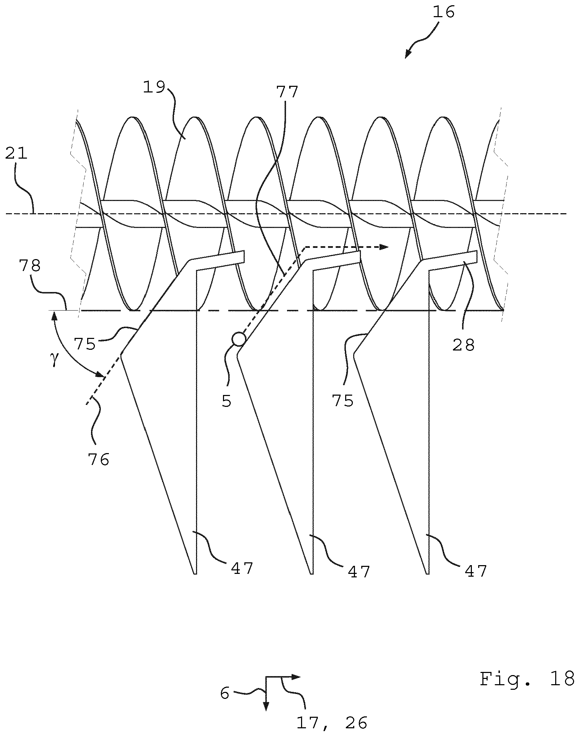

Aus Fig. 19 ist eine schematische Draufsicht auf eine erfindungsgemäße Pflückvorrichtung 16 und auf mehrere Pflanzenreihen 62 ersichtlich, die sich in Richtung 63 erstrecken. Mit der erfindungsgemäßen Pflückvorrichtung 16, die gemäß jeder der Ausführungsformen ausgebildet sein kann, ist es möglich, die Arbeitsrichtung 6 quer oder schräg zur Richtung 63 der Pflanzenreihen 62 auszurichten, sodass die Pflanzen 5 reihenunabhängig abgeerntet werden können.

### Bezugszeichenliste

1 Pflückvorsatz
2 Erntefahrzeug
3 Frucht
4 Stängel
5 Pflanze
6 Arbeitsrichtung
7 Erdboden
8 Fördereinheit
9 Tragkonstruktion
10 Trog
11 Querförderschnecke
12 Drehachse der Querförderschnecke
13 Schrägförderer
14 Innenraum
15 Teilerspitze
16 Segment, Pflückvorrichtung
17 Querrichtung
18 Fördereinrichtung
19 Schneidförderschnecke
20 Halterung
21 Schneckenachse
22 Antrieb
23 Drehrichtung der Schneidförderschnecke
24 radialer Vorsprung an Schneidförderschnecke
25 Messer
26 Förderrichtung
27 Übergabebereich
28 Führungselement
29 Hilfstransportvorrichtung
30 Kette
31 Finger
32 Schneckenflügel, entgegengesetzt gewendelt
33 Pflückplatte
34 Pflückspalt
35 Pflückwalze
36 Pflückwalze
37 Drehachse der Pflückwalze
38 Drehachse der Pflückwalze
39 Schneckenwindung der Pflückwalze
40 Schneckenwindung der Pflückwalze
41 Richtung nach unten
42 schräge Platte
43 radialer Vorsprung
44 Messerscheibe
45 Drehachse der Messerscheibe
46 Scharnier
47 zusätzliche Teilerspitze
48 Greifschneider
49 Greifer
50 Schneide
51 Messer
52 konusförmige Schnecke
53 Drehachse der konusförmigen Schnecke
54 Förderschnecke
55 Förderschnecke
56 Drehachse
57 Drehachse
58 Längsachse des Pflückspalts
59 Längsachse des Stängels
60 Schneide
61 Schneckengang
62 Pflanzenreihe
63 Richtung der Pflanzenreihen
64 Wurzel der Pflanze
65 Erfassungsbereich der Fördereinrichtung
66 fiktive Mantelfläche der Schneidförderschnecke
67 elastische Verformungsrichtung
68 Innenfläche des Messers
69 Blattfeder
70 tragender Teil des Messers
71 Durchtrittsöffnung zwischen zwei Führungselementen
72 unterer Abschnitt des Führungselements
73 oberer Abschnitt des Führungselements
74 Führung
75 Leiteinrichtung
76 Gerade
77 Pfeil
78 Gerade, parallel zur Schneckenachse
α Schnittwinkel
β Freiwinkel
γ Winkel
R Abstand / Radius
R1 Abstand

## Patentansprüche

1. Pflückvorrichtung mit wenigstens einer in einer Arbeitsrichtung (6) bewegbaren Halterung (20), an der wenigstens eine Fördereinrichtung (18) mit einem vorderen Erfassungsbereich (65) vorgesehen ist, mit dem die Fördereinrichtung (18) durch Bewegen der Halterung (20) in Arbeitsrichtung (6) in Kontakt mit Früchte (3) umfassenden Pflanzen (5) bringbar ist, sodass diese mittels der Fördereinrichtung (18) erfassbar und in einer oder wenigstens einer Förderrichtung (26) förderbar sind, und einem hinter der Fördereinrichtung (18) vorgesehenen Pflückspalt (34), durch welchen hindurch die Pflanzen (5) unter Abtrennen der Früchte (3) führbar sind, **dadurch gekennzeichnet, dass** die Fördereinrichtung (18) eine um eine quer oder näherungsweise quer zur Arbeitsrichtung (6) ausgerichtete Schneckenachse (21) drehbar an der Halterung (20) gelagerte Schneidförderschnecke (19) umfasst, wobei die Förderrichtung (26) in Richtung der Schneckenachse (21) verläuft.

2. Pflückvorrichtung nach Anspruch 1, **dadurch gekennzeichnet, dass** der Pflückspalt (34) mit seiner Längsachse (58) quer oder näherungsweise quer zur Arbeitsrichtung (6) und parallel oder näherungsweise parallel zum Erdboden (7) ausgerichtet ist.

3. Pflückvorrichtung nach Anspruch 1 oder 2, **dadurch gekennzeichnet, dass** an der Halterung (20) mehrere Messer (25) vorgesehen sind, wobei die Pflanzen (5) mittels der Fördereinrichtung (18) gegen wenigstens eines der Messer (25) führbar und an diesem durchtrennbar sind.

4. Pflückvorrichtung nach Anspruch 3, **dadurch gekennzeichnet, dass** die Messer (25) gekrümmt ausgebildet sind und die Schneidförderschnecke (19) zumindest teilweise umgreifen.

5. Pflückvorrichtung nach einem der vorangehenden Ansprüche, **dadurch gekennzeichnet, dass** mittels der Fördereinrichtung (18) die Pflanzen (5) in einer zum Erdboden (7) parallelen oder näherungsweise parallelen Richtung (26) transportierbar sind.

6. Pflückvorrichtung nach einem der vorangehenden Ansprüche, **dadurch gekennzeichnet, dass** die Schneckenachse (21) der Schneidförderschnecke (19) parallel oder näherungsweise parallel zum Erdboden (7) ausgerichtet ist.

7. Pflückvorrichtung nach einem der vorangehenden Ansprüche, **gekennzeichnet durch** einen Antrieb (22), mittels welchem die Schneidförderschnecke (19) von vorne gesehen nach oben drehend antreibbar ist.

8. Pflückvorrichtung nach einem der vorangehenden Ansprüche, **dadurch gekennzeichnet, dass** quer zur Arbeitsrichtung (6) mehrere Führungselemente (28) im Abstand zueinander an der Halterung (20) befestigt sind, die vor der Fördereinrichtung (18) angeordnet sind, sich nach oben erstrecken und mit ihren oberen Bereichen in Förderrichtung (26) geneigt, gekrümmt oder abgewinkelt sind.

9. Pflückvorrichtung nach einem der vorangehenden Ansprüche, **gekennzeichnet durch** wenigstens eine an der Halterung (20) vorgesehene Hilfstransportvorrichtung (29), mit Hilfe derer die Pflanzen (5) oberhalb der Fördereinrichtung (18) erfassbar und im Zusammenwirken mit dieser transportierbar sind.

10. Pflückvorrichtung nach Anspruch 9, **dadurch gekennzeichnet, dass** die Hilfstransportvorrichtung (29) einen Kettenförderer umfasst oder durch diesen gebildet ist.

11. Pflückvorrichtung nach Anspruch 9 oder 10, **dadurch gekennzeichnet, dass** die Pflanzen (5) mit Hilfe der Hilfstransportvorrichtung (29) von der Fördereinrichtung (18) wegführbar und dem Pflückspalt (34) zuführbar sind.

12. Verfahren zum Ernten von Früchte umfassenden Pflanzen, wobei wenigstens eine einen vorderen Erfassungsbereich (65) umfassende Fördereinrichtung (18) relativ zu den Pflanzen (5) in einer Arbeitsrichtung (6) bewegt und dadurch mit ihrem Erfassungsbereich (65) in Kontakt mit den Pflanzen (5) gebracht wird, sodass diese mittels der Fördereinrichtung (18) erfasst und in einer oder wenigstens einer Förderrichtung (26) gefördert werden, wonach die Pflanzen (5) einem Pflückvorgang zum Abtrennen der Früchte (3) unterzogen werden, **dadurch gekennzeichnet, dass** die Fördereinrichtung (18) eine um eine quer oder im Wesentlichen quer zur Arbeitsrichtung (6) ausgerichtete Schneckenachse (21) drehende Schneidförderschnecke (19) umfasst, mittels welcher die Pflanzen (5) erfasst und entlang der Schneckenachse (21) gefördert werden, sodass die Förderrichtung (26) in Richtung der Schneckenachse (21) verläuft.

13. Verfahren nach Anspruch 12, **dadurch gekennzeichnet, dass** durch das Zusammenwirken der Schneidförderschnecke (19) mit mehreren gekrümmten und die Schneidförderschnecke (19) zumindest teilweise umgreifenden Messern (25) die Pflanzen (5) durchtrennt werden, bevor die Pflanzen (5) dem Pflückvorgang unterzogen werden.

## Claims

1. Picking device with at least one holder (20) movable in a working direction (6) on which at least one conveying device (18) is provided with a front gathering region (65), with which the conveying device (18) can be moved into contact with plants bearing produce (3) by moving the holder (20) in the working direction (6) such that they can be gathered by means of the conveying device (18) and be conveyed in one or at least one conveying direction (26), and a picking gap (34) provided after the conveying device (18), through which the plants (5) can be guided separating the produce (3), **characterised in that** the conveying device (18) comprises a cutting screw conveyor (19) mounted on the holder (20) so as to be rotatable about a screw axis (21) aligned transversally or approximately transversally to the working direction (6), wherein the conveying direction (26) runs in the direction of the screw axis (21).

2. Picking device according to claim 1, **characterised in that** the picking gap (34) is aligned with its longitudinal axis (58) transversally or approximately transversally to the working direction (6) and parallel or approximately parallel to the ground (7).

3. Picking device according to claim 1 or 2, **characterised in that** a plurality of blades (25) are provided on the holder (20), wherein the plants (5) can be guided by means of the conveying device (18) towards at least one of the blades (25) and separated on it.

4. Picking device according to claim 3, **characterised in that** the blades (25) are formed curved and at least partially encompass the cutting conveyor screw (19).

5. Picking device according to any one of the preceding claims, **characterised in that** by means of the conveying device (18) the plants (5) can be transported in a direction (26) parallel or approximately parallel to the ground (7).

6. Picking device according to any one of the preceding claims, **characterised in that** the screw axis (21) of the cutting screw conveyor (19) is aligned parallel to approximately parallel to the ground (7).

7. Picking device according to any one of the preceding claims, **characterised by** a drive (22) by means of which the cutting screw conveyor (19) is drivable in an upwardly rotating manner viewed from the front.

8. Picking device according to any one of the preceding claims, **characterised in that** a plurality of guide elements (28) are fastened transversally to the working direction (6) spaced from one another on the holder (20), which are arranged in front of the conveying device (18), extend upwards and are inclined, curved or angled with their upper regions in the conveying direction (26).

9. Picking device according to any one of the preceding claims, **characterised by** at least one auxiliary transport device (29) provided on the holder (20), by means of which the plaints (5) can be gathered above the conveying device (18) and transported in cooperation therewith.

10. Picking device according to claim 9, **characterised in that** the auxiliary transport device (29) comprises a chain conveyor or is formed thereby.

11. Picking device according to claim 9 or 10, **characterised in that** the plaints (5) can be guided away from the conveying device (18) by means of the auxiliary transport device (29) and supplied to the picking gap (34).

12. Method of harvesting plants bearing produce, wherein at least one conveying device (18) comprising a front gathering region (65) moves relative to the plants (5) in a working direction (6) and as a result is moved into contact with the plants (5) with its gathering region (65) such that the plants are gathered by means of the conveying device (18) and conveyed in one or at least one conveying direction (26), after which the plants (5) are subject to a picking operation to separate the produce (3), **characterised in that** the conveying device (18) comprises a cutting screw conveyor (19) rotating about a screw axis (21) aligned transversally or substantially transversally to the working direction (6), by means of which the plaints (5) are gathered and conveyed along the screw axis (21), such that the conveying direction (26) runs in the direction of the screw axis (21).

13. Method according to claim 12, **characterised in that** the plants (5) are separated by the cooperation of the cutting screw conveyor (19) with a plurality of curved blades (25) at least partially encompassing the cutting screw conveyor (19) before the plants (5) are subject to the picking operation.

## Revendications

1. Dispositif de récolte avec au moins un support (20), mobile dans une direction de travail (6), sur lequel il est prévu au moins un dispositif de transport (18) avec une zone de collecte (65) avant avec laquelle le dispositif de transport (18) peut, par le déplacement du support (20) dans la direction de travail (6), être mis en contact avec des plantes (5) comprenant des fruits (3) de telle sorte que celles-ci peuvent être collectées au moyen du dispositif de transport (18) et peuvent être transportées dans une ou au moins une direction de transport (26), et avec un interstice de récolte (34) prévu derrière le dispositif de transport (18) et à travers lequel les plantes (5) peuvent être conduites concurremment avec une séparation des fruits (3), **caractérisé en ce que** le dispositif de transport (18) comprend un convoyeur à vis-coupeur (19) supporté sur le support (20) en rotation autour d'un axe de vis sans fin (21) orienté transversalement ou à peu près transversalement à la direction de travail (6), la direction de transport (26) étant dirigée vers l'axe de vis sans fin (21).

2. Dispositif de récolte selon la revendication 1, **caractérisé en ce que** l'interstice de récolte (34) est, avec son axe longitudinal (58), orienté transversalement ou à peu près transversalement à la direction de travail (6) et parallèlement ou à peu près parallèlement au sol (7).

3. Dispositif de récolte selon la revendication 1 ou 2, **caractérisé en ce que** plusieurs couteaux (25) sont prévus sur le support (20), les plantes (5) pouvant être guidées au moyen du dispositif de transport (18) contre au moins un des couteaux (25) et être sectionnées sur celui-ci.

4. Dispositif de récolte selon la revendication 3, **caractérisé en ce que** les couteaux (25) sont constitués de façon courbée et entourent au moins partiellement le convoyeur à vis-coupeur (19).

5. Dispositif de récolte selon l'une des revendications précédentes, **caractérisé en ce que**, au moyen du dispositif de transport (18), les plantes (5) peuvent être transportées dans une direction (26) parallèle ou à peu près parallèle au sol (7).

6. Dispositif de récolte selon l'une des revendications précédentes, **caractérisé en ce que** l'axe de vis sans fin (21) du convoyeur à vis-coupeur (19) est orienté parallèlement ou à peu près parallèlement au sol (7).

7. Dispositif de récolte selon l'une des revendications précédentes, **caractérisé par** un entraînement (22) au moyen duquel le convoyeur à vis-coupeur (19) peut être entraîné en rotation vers le haut vu de devant.

8. Dispositif de récolte selon l'une des revendications précédentes, **caractérisé en ce que**, transversalement à la direction de travail (6), plusieurs éléments de guidage (28) sont fixés sur le support (20) à distance les uns des autres, sont disposés devant le dispositif de transport (18), s'étendent vers le haut et, par leurs zones supérieures, sont inclinés, courbés ou coudés dans la direction de transport (26).

9. Dispositif de récolte selon l'une des revendications précédentes, **caractérisé par** au moins un dispositif de transport auxiliaire (29), prévu sur le support (20), à l'aide duquel les plantes (5) peuvent être collectées au-dessus du dispositif de transport (18) et peuvent être transportées en coopération avec celui-ci.

10. Dispositif de récolte selon la revendication 9, **caractérisé en ce que** le dispositif de transport auxiliaire (29) comprend un convoyeur à chaîne ou est formé par celui-ci.

11. Dispositif de récolte selon la revendication 9 ou 10, **caractérisé en ce que** les plantes (5) peuvent être éloignées du dispositif de transport (18) à l'aide du dispositif de transport auxiliaire (29) et peuvent être acheminées à l'interstice de récolte (34).

12. Procédé destiné à la récolte de plantes comprenant des fruits, dans lequel au moins un dispositif de transport (18) comprenant une zone de collecte (65) avant est déplacé relativement aux plantes (5) dans une direction de travail (6) et est de ce fait mis en contact avec les plantes (5) par sa zone de collecte (65) de telle sorte que celles-ci sont collectées au moyen du dispositif de transport (18) et sont transportées dans une ou au moins une direction de transport (26), après quoi les plantes (5) sont soumises à un processus de récolte pour la séparation des fruits (3), **caractérisé en ce que** le dispositif de transport (18) comprend un convoyeur à vis-coupeur (19), tournant autour d'un axe de vis sans fin (21) orienté transversalement ou essentiellement transversalement à la direction de travail (6), au moyen duquel les plantes (5) sont collectées et transportées le long de l'axe de vis sans fin (21) de telle sorte que la direction de transport (26) est dirigée vers l'axe de vis sans fin (21).

13. Procédé selon la revendication 12, **caractérisé en ce que**, du fait de la coopération du convoyeur à vis-coupeur (19) avec plusieurs couteaux (25) courbés et entourant au moins partiellement le convoyeur à vis-coupeur (19), les plantes (5) sont sectionnées avant que les plantes (5) soient soumises au processus de récole.
